# EUROPÄISCHE PATENTSCHRIFT

(11) **EP 0 392 360 B1**
(45) Veröffentlichungstag und Bekanntmachung des Hinweises auf die Patenterteilung: **03.08.1994**
(21) Anmeldenummer: 90106526.8
(22) Anmeldetag: 05.04.1990
(51) Int. Cl.: G11B 5/842

(54) **Verfahren zur Herstellung von magnetischen Aufzeichnungsträgern**
Method for manufacturing magnetic recording media
Procédé pour la fabrication de supports d'enregistrement magnétiques

(30) Priorität: 13.04.1989 DE 3912082
(43) Veröffentlichungstag der Anmeldung: 17.10.1990
(73) Patentinhaber: BASF Aktiengesellschaft, 67063 Ludwigshafen (DE)
(72) Erfinder: Platz, Horst, D-7608 Willstaett (DE); Engelhardt, Peter, D-6831 Plankstadt (DE); Sommermann, Friedrich, Dr., D-7640 Kehl (DE); Kohl, Albert, D-6711 Laumersheim (DE); Klausmann, Juergen, D-7600 Offenburg (DE); Baur, Reinhold, Dr., D-7601 Ortenberg (DE); Heilmann, Peter, Dr., D-6702 Bad Duerkheim (DE); Roller, Hermann, D-6700 Ludwigshafen (DE)

(56) Entgegenhaltungen:
- DE-A- 3 526 415
- PATENT ABSTRACTS OF JAPAN, unexamined applications, P Field, Band 10, Nr. 74, 25. März 1986 THE PATENT OFFICE JAPANESE GOVERNMENT Seite 24 P 439
- PATENT ABSTRACTS OF JAPAN, unexamined applications, P Field, Band 11, Nr. 118, 14. April 1987 THE PATENT OFFICE JAPANESE GOVERNMENT Seite 63 P 567

## Beschreibung

Die Erfindung betrifft ein Verfahren zur Herstellung von magnetischen Aufzeichnungsträgern durch Dispergieren von pulverförmigem, magnetischem Material mit Hilfe von üblichen Dispergiereinrichtungen in einem Gemisch aus Lösungsmitteln, organischen Polymerbindemitteln, Dispergierhilfsmittel und weiteren üblichen Zusatzstoffen, schichtförmiges Auftragen der resultierenden Dispersion auf ein Trägermaterial und anschließendes verfestigen der Schicht.

Die Herstellung von pulverförmigem, magnetischem Material enthaltenden Dispersionen im Rahmen der Produktion von magnetischen Aufzeichnungsträgern ist bekannt. Diese Dispersionen bestehen aus einem pulverförmigen, magnetischen Material, einem Lösungsmittel oder -gemisch, mindestens einem in diesem Lösungsmittel (-gemisch) löslichen oder dispergierbaren organischen Polymeren oder Präpolymeren, Dispergierhilfsmitteln und weiteren organischen und/oder anorganischen Zusatzstoffen, wie Gleitmittel, Viskositätsregulatoren, Stabilisatoren, inerte anorganische Substanzen zur Regulierung der Leitfähigkeit, des Abriebs, der Rauhigkeit usw.. Die Bereitung der Dispersionen aus den angeführten Komponenten geschieht in Dispergiereinrichtungen, im allgemeinen Mühlen genannt, mit deren Hilfe durch das Einwirken eines, je nach Bauart der Mühle, mittleren bis hohen Schergefälles, die pulverförmigen Materialien weitgehend in ihre Einzelteilchen getrennt und mit dem Bindemittel und/oder Netzmittel umhüllt werden. Bedingt durch die Art der Herstellung als auch durch die sich daran anschließende Aufbereitung der magnetischen Pulvermaterialien entstehen aus Einzelteilchen aufgebaute Agglomerate mit sehr unterschiedlichem Sekundärteilchendurchmesser. Zur Herstellung hochwertiger magnetischer Aufzeichnungsträger ist es aber erforderlich, daß die meist nadelförmigen magnetischen Teilchen als weitgehend gleichförmige Einzelteilchen in einer vorgegebenen der Aufzeichnungsrichtung entsprechenden Vorzugsrichtung in gleichen Abständen zueinander vorliegen, wobei die möglichst kleinen Zwischenräume mit Bindemittel ausgefüllt sind und keine Luft- oder sonstige Fremdstoffeinschlüsse aufweisen.

Entsprechend diesen Forderungen sollte die Dispergierung schonend erfolgen, d.h. beim Dispergiervorgang in Kugelmühlen, Rohrmühlen, Rührwerksmühlen oder durch Kesselmahlung weitgehend so, daß die Agglomerate zerstört werden, ohne daß die Einzelnadeln brechen.

Die ständige Forderung nach höheren Aufzeichnungsdichten, maximalen Ela- und Elav-Werten bei immer geringeren Schichtdicken der magnetischen Schichten, erfordern homogene, äußerst glatte Oberflächen der Aufzeichnungsträger und hierfür eine vollständige und schonende Aufteilung der Magnetpigmentagglomerate. Um dies mit wirtschaftlich vertretbarem Zeitaufwand zu erreichen, werden, wie z.B. in der DE-A-35 26 415 aufgezeigt, Dispergiermaschinen mit hoher örtlicher Energiedichte, wie z.B. Rührwerksmühlen, Planetkugelmühlen, Sandmühlen oder Attritoren, eingesetzt.

Ebengenannte DE-A-3526415 offenbart ein Verfahren mit den Merkmalen des Oberbegriffs des Anspruchs 1.

Die bekannten Dispergierverfahren haben jedoch einen besonderen Nachteil. Durch das Einbringen sehr hoher Energiedichten und der Verwendung von Mahlkörpern von 0,2 bis 4,0 üblicherweise 0,6 bis 2,00 mm Durchmesser, werden die Pigmentagglomerate weitgehend in ihre Einzelteilchen aufgeteilt und dadurch die benetzbare Pigmentoberfläche vergrößert. Bei konstantem Dispergier- und/oder Stabilisierungsmittelanteil wird somit die Dispergier- und/oder Stabilisierungsmitteladsorptionsschicht mit zunehmendem Aufteilungsgrad dünner, wodurch die für die sterische Stabilisierung notwendige elastische Deformation der Adsorptionsschichten nicht mehr gewährleistet ist, die elastischen entropischen und osmotischen Abstoßungseffekte können nicht mehr in ausreichendem Maße wirksam werden. Die Folge ist eine in Abhängigkeit von Typ des Magnetpigments, dessen spezifische Oberfläche nach BET und dessen oberflächenaktiver Ausrüstung geringe oder ausgeprägte Tendenz zur latenten Dispersionsstabilität, welche sich durch Flokkulation und dadurch bedingten Verlust der Aufzeichnungseigenschaften der daraus hergestellten Aufzeichnungsträger bemerkbar macht.

Aufgrund dieser Erkenntnis wäre es nun naheliegend durch Erhöhung des Dispergier- und/oder Stabilisierungsmittelanteils die für eine sterische Stabilität notwendige Dispergier- und/oder Stabilisierungsmitteladsorptionsschicht wieder auszugleichen. Durch eine Erhöhung des Dispergier- und/oder Stabilisierungsmittelanteils werden jedoch die mechanischen Eigenschaften, wie z.B. die Standbildfestigkeit bei Videobändern, oder die Abriebfestigkeit bei Audio- und Computerbändern verschlechtert. Außerdem neigen solche Magnetbänder mit erhöhtem Dispergier- und/oder Stabilisierungsmittelanteil zum Ausschwitzen und Verkleben, insbesondere bei erhöhter Temperatur und erhöhter Luftfeuchtigkeit.

Aufgabe der Erfindung war es nun ein Verfahren aufzuzeigen, bei dem die bekannten effektiven Dispergieraggregate genutzt werden und dennoch ohne Erhöhung des Dispergier- und/oder Stabilisierungsmittelanteils homogene und stabile Dispersionen hergestellt werden können, wodurch eine wesentliche Verbesserung der magnetischen Eigenschaften und somit der Aufzeichnungseigenschaften der resultierenden magnetischen Aufzeichnungsträger bewirkt wird.

Es wurde nun gefunden, daß bei einem Verfahren zur Herstellung von magnetischen Aufzeichnungsträgern durch Dispergieren von feinteiligem, magnetischem Material in einem Gemisch aus Lösungsmitteln, organischen Polymerbindemitteln, Dispergierhilfsmitteln und weiteren Zusatzstoffen, schichtförmiges Auftragen der Dispersion auf ein Trägermaterial und anschließendes Verfestigen der Schicht, wobei die Dispersion in einer Rührwerksmühle, welche mit Mahlkörpern mit einem Durchmesser von 0,2 bis 3,0 mm und einer Dichte von 3,6 bis 3,9 g/cm³ gefüllt ist, hergestellt wird, und die Viskosität der resultierenden Dispersion, gemessen bei einer Temperatur von 25°C, mindestens 50 mPas beträgt, mit der Maßgabe, daß das eingesetzte feinteilige, magnetische Material eine Oberfläche nach BET von mindestens 14 m²/g aufweist, die Aufgabe gelöst werden kann, wenn die Dispersion anschließend in einer Kugelmühle, enthaltend Mahlkörper mit einem Durchmesser von mehr als 2,0 mm und einer Dichte von größer als 4,2 g/cm³, nachbehandelt wird.

Die Herstellung der Dispersion nach dem erfindungsgemäßen Verfahren erfolgt in der Weise, daß das magnetische Material, das Dispergierhilfsmittel, das Lösungsmittel und das gelöste Bindemittel, sowie gegebenenfalls weitere Zusatzstoffe in die mit üblicherweise kugelförmigen Mahlkörpern, vorzugsweise bestehend aus 60 bis 80 Gew.% ZrO₂ und 20 bis 40 Gew.% SiO₂, insbesondere bestehend aus 69 % Zirkoniumoxid und 31 % Siliciumoxid, und einem Durchmesser von 0,2 bis 3,0 mm, vorzugsweise 0,6 bis 2,0 mm und einer Dichte von 3,6 bis 3,9 g/cm³ gefüllte Rührwerksmühle eingebracht werden. Zur einwandfreien Verarbeitung der Dispersion ist es angebracht, wenn die Dispersion eine Viskosität von mindestens 100 mPas (gemessen bei 25°C), insbesondere bis zu 600 mPas aufweist.

JP-A-60-211633 offenbart ebenfalls ein Verfahren zur Herstellung von magnetischen Aufzeichnungsträgern mit Nachbehandlung. Hier aber wird die Dispersion zuerst in einer Kugelmühle mit Mahlkörpern mit einem Durchmesser ≧8 mm hergestellt und anschließend in einer Sandmühle mit Mahlkörpern mit einem Durchmesser ≦3 mm nachbehandelt.

Sobald die Pigmentagglomerate nahezu vollständig in die Einzelteilchen aufgelöst und somit der erforderliche Dispergiergrad erreicht ist, wird die Magnetdispersion in unmittelbarem Anschluß zur Erreichung einer stabilen Form mindestens 10 Minuten, vorzugsweise 2 bis 24 Stunden, in einer Kugelmühle, die mit kugelförmigen Mahlkörpern aus Stahl oder einer entsprechenden Metall-Legierung mit einer Dichte von mindestens 4,2 g/cm³, insbesondere 7,8 g/cm³ und einem Durchmesser von mehr als 2 mm, vorteilhafterweise zwischen 2 und 10 mm und insbesondere zwischen 4 und 6 mm gefüllt ist, nachbehandelt, bis sich die Dispersion in ihrem Aufteilungsgrad nicht mehr verändert und damit in dieser Form auch bei der Lagerung stabil bleibt.

Die Zusammensetzung der Dispersion, welche im Rahmen des erfindungsgemäßen Verfahrens zur Herstellung magnetischer Aufzeichnungsträger verwendet wird, entspricht ansonsten dem Stand der Technik. Als magnetische Materialien werden bevorzugt feinteiliges nadelförmiges Gamma-Eisen(III)oxid mit einer durchschnittlichen Teilchengröße von 0,1 bis 2 µm und insbesondere von 0,1 bis 0,9 µm oder stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere Kobalt, feinteilige Metall-Legierungen von Eisen, Kobalt und/oder Nickel sowie geeignete Ferritmaterialien. Bevorzugt werden magnetische Materialien, welche sehr feinteilig sind und insbesondere eine spezifische Oberfläche nach BET von mindestens 14 m²/g, bevorzugt mindestens 26 m²/g, aufweisen.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomer, Mischungen von Polyisocyanaten und höhermolekularen Polyhydroxyverbindungen oder Vinylchloridcopolymerisate mit über 60 % an Vinylchlorid-Molekülbausteinen, z.B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomerem oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und VC-Copolymerisaten der oben angegebenen Zusammensetzung. Als Polyurethanelastomere-Binder werden handelsubliche elastomere Polyurethane aus Adipinsäure, 1,4-Butandiol und 4,4-Diisocyanatodiphenylmethan bevorzugt angewandt. Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundaren Aminoalkohols und gegebenenfalls eines Triols mit einem Diisocyanat erhalten wird.

Magnetdispersionen, die sich besonders für die Herstellung von starren magnetischen Aufzeichnungsplatten eignen, enthalten bevorzugt als Bindemittel Epoxidharze, Phenoxyharze, Aminoplast-Vorkondensate, Polyesterharze, Polyurethane oder Polyurethanbildner und Mischungen solcher Bindemittel miteinander als auch mit anderen Bindemitteln, wie Polycarbonaten oder Vinylpolymeren, z.B. Vinylchlorid- oder Vinylidenchlorid-Copolymere oder hitzehärtbare Acrylat- oder Methacrylat-Copolymere.

Den Dispersionen können weitere Zusatzstoffe zur Herstellung der Magnetschichten, beispielsweise geringe Monocarbonsäureanteile, Gemische oder Ester derselben sowie Füllstoffe, wie Ruß, Graphit, Quarzmehl, unmagnetisches α-Fe₂O₃ und/oder Pulver auf Silicatbasis und Mittel zur Verbesserung des Verlaufs, wie geringe Mengen Siliconöl, zugesetzt werden. Diese Zusätze sollen zweckmäßigerweise insgesamt 12 Gew.%, bevorzugt 8 Gew.%, bezogen auf das magnetische Material, nicht überschreiten.

Die Magnetdispersion wird mit Hilfe üblicher Beschichtungsmaschinen, z.B. mittels eines Linealgießers, auf den nichtmagnetischen Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 1 bis 200 µm und insbesondere von 6 bis 36 µm. Bevor die noch flüssige Beschichtungsmischung auf dem Träger getrocknet wird, was zweckmäßigerweise bei Temperaturen von 50 bis 90°C während 10 bis 200 Sekunden geschieht, werden die anisotropen Magnetteilchen gegebenenfalls durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen geglättet und verdichtet werden. Die Dicke der Magnetschicht beträgt im allgemeinen 0,5 bis 10 µm.

Mit dem erfindungsgemäßen Verfahren lassen sich in überraschender Weise, insbesondere äußerst feinteilige hochstabile Magnetdispersionen, wie sie für extrem hochaussteuerbare, nur sehr geringes Rauschen aufweisende magnetische Aufzeichnungsträger erforderlich sind, in einfacher wirtschaftlicher Weise herstellen. Vor allem bei magnetischen Aufzeichnungsträgern für die Bildaufzeichnung sind sowohl hohe magnetische Werte, geringe Teilchengröße, weitgehend einheitliche Teilchengrößenverteilung und homogener Beschichtungsaufbau zur Gewährleistung hoher Qualität erforderlich. Gerade diese meist gegenläufigen Eigenschaftsprofile lassen sich mit dem erfindungsgemäßen Verfahren in besonders vorteilhafter Weise lösen.

Die Erfindung sei anhand folgender Beispiele im Vergleich zu Versuchen aus dem Stand der Technik näher erläutert.

### Beispiel 1

80 Teile eines nadelförmigen magnetischen Chromdioxidpulvers mit einer mittleren Teilchenlänge von 0,6 µm und einer spezifischen Oberfläche nach BET von 26 bis 27 m²/g sowie einer Koerzitivfeldstärke von 48 kA/m und 20 Teile eines nadelförmigen, magnetischen Eisenpulvers mit einer mittleren Teilchenlänge von 0,7 µm, einer spezifischen Oberfläche nach BET von 26 bis 26 m²/g und einer Koerzitivfeldstärke von 50 kA/m, wurden in 36,8 Teilen einer 50%igen Lösung eines thermoplastischen, niedermolekularen, polyfunktionellen Polyurethans in einem Gemisch aus gleichen Teilen Tetrahydrofuran und Dioxan, 23,0 Teilen einer 16,5%igen Lösung eines Polyvinylformals, bestehend aus 82 % Vinylformal-, 12 % Vinylacetat- und 6 % Vinylalkoholeinheiten, mit einem K-Wert von 50 (1 % in DMF), im vorgenannten Lösungsmittelgemisch, 1,0 Teilen Methylstearat, 0,5 Teilen Stearinsäure und 1,7 Teilen Zinkoleat in einer 1000 Volumenteile fassenden, mit 700 bis 750 Volumenteile Kugeln, bestehend aus 69 % ZrO₂ und 31 % SiO₂ mit einem Durchmesser von 0,6 bis 1,5 mm gefüllten Rührwerksmühle 28 Stunden dispergiert. Anschließend wurden 600 Teile dieser Magnetdispersion in einer 1000 Volumenteile fassenden Kugelmühle mit 300 Volumenteilen Stahlkugeln mit einem Durchmesser von 4 bis 6 mm 8 Stunden nachbehandelt. Nach Beendigung des Finishprozesses wurde die Magnetdispersion filtriert, 12,6 Teile einer 50%igen Lösung eines Triisocyanats, gefertigt aus 3 Molen Toluylendiisocyanat und 1 Mol 1,1,1-Trimethylolpropan in Tetrahydrofuran hinzugefügt und 15 Minuten gerührt. Nach dem Filtrieren der Dispersion wurde diese schichtförmig auf eine 16 µm dicke Polyethylenterephthalatfolie unter gleichzeitiger Ausrichtung der Magnetpartikel mittels eines Permanentmagneten aufgetragen. Die nach dem Trocknen 3 µm dicke Magnetschicht wurde durch Hindurchführen zwischen beheizten Walzen und unter Druck geglättet und die beschichtete Folienbahn in ¹/₂" breite Bänder geschnitten.

### Vergleichsversuch 1

Es wurde wie im Beispiel 1 beschrieben verfahren, jedoch wurde auf den im Beispiel 1 dem Dispergieren nachgeschalteten Finishprozess in der Kugelmühle verzichtet.

### Vergleichsversuch 2

Es wurde wie im Beispiel 1 beschrieben verfahren, jedoch wurden 2,3 Teile Zinkoleat zugesetzt und auf den nachgeschalteten Finishprozess in der Kugelmühle verzichtet.

### Vergleichsversuch 3

Es wurde wie im Beispiel 1 beschrieben verfahren, jedoch wurden zusätzlich 0,3 Teile eines Reaktionsproduktes aus Polycaprolacton und Polyimid zugesetzt und auf den nachgeschalteten Finishprozess in der Kugelmühle verzichtet.

Die aus Beispiel 1 sowie den Vergleichsversuchen 1 bis 3 resultierenden magnetischen Aufzeichnungsträger wurden den nachstehend angegebenen Messungen unterworfen. Die Ergebnisse sind in Tabelle 1 angegeben.
1. Glanzmessung mit einem Reflektometer Typ RB 3 der Firma Lange, Einfallswinkel 60°.
   - Glanz A -: die Dispersion wurde sofort nach dem Dispergier- bzw. Finishprozess beschichtet. Die Glanzmessung erfolgte am unsatinierten Bandstück.
   - Glanz B -: die fertige Dispersion wurde 3 Stunden in einem Vorratsbehälter unter leichter Scherbeanspruchung gelagert, danach beschichtet und der Glanz am unsatinierten Bandstück gemessen.
2. Die Messung der Rauhigkeit R_{Z} erfolgte mit einem Perthometer SSP, Firma Feinprüf, Göttingen. Testspitzenradius 2,5 µm, cut-off 0,25 mm, Meßstrecke 4,8 mm quer zur Gießrichtung.
3. JFK-Abstand mit Interferenzkontrast-Weißlicht-Anlage gemäß EP-A 2710.
4. Die FSM-Messung dient zur Bewertung der Farbqualität der aufgezeichneten Bildinformation. Dabei wurde eine charakteristische Frequenz des Videosignals analysiert und mit dem auf einem Referenzband aufgezeichneten Videosignal verglichen.
5. Bei der Dropout-Messung wurde das aufgezeichnete Videosignal bei der Wiedergabe analysiert. Ein Dropout 1 (DO 1) ist ein Signalausfall mit einem Pegeleinbruch von größer 14 dB und einer Dauer von größer 15 µs. Ein Dropout 2 (DO 2) ist ein Signalabfall mit einem Pegeleinbruch von größer 14 dB und einer Dauer von größer 5 µs.

**Tabelle 1**

| | Beispiel | Vergleichsversuche | | |
|---|---|---|---|---|
| | 1 | 1 | 2 | 3 |
| Glanz A (Skt.) | 80-95 | 80- 90 | 80-90 | 80-95 |
| Glanz B (Skt.) | 80-95 | 10- 30 | 20-40 | 80-90 |
| Rauhigkeit R_{Z} (nm) | 30-45 | 40-100 | 40-80 | 30-45 |
| JFK-Abstandt (nm) | 40-50 | - | - | - |
| FSM (dB) | - 2 | - 7 | - 7 | - |
| DO 1 | 6- 9 | 25- 35 | 25-35 | - |
| DO 2 | 12-18 | 60- 80 | 60-80 | - |

Beim Vergleichsversuch 2 wurde nach der Lagerung ein starker Dropout-Anstieg festgestellt. Dies ist auf die Überdosierung des Dispergierhilfsmittels zurückzuführen.

Beim Vergleichsversuch 3 wurden bereits beim Kalandrieren Beschläge durch das Ausschwitzen des genannten Reaktionsprodukts auf den Kalanderwalzen festgestellt. Der Versuch wurde deshalb abgebrochen.

### Beispiel 2

85 Teile eines nadelförmigen magnetischen Eisenpulvers mit einer mittleren Teilchengröße von 0,7 µm und einer spezifischen Oberfläche nach BET von 26 m²/g sowie einer Koerzitivfeldstärke von 48 kA/m und 15 Teile eines nadelförmigen, magnetischen Chromdioxidpulvers mit einer mittleren Teilchenlänge von 0,6 µm, einer spezifischen Oberfläche nach BET von 26 bis 28 m²/g sowie einer Koerzitivfeldstärke von 40 kA/m, wurden mit 10 Teilen eines kugelförmigen Aluminiumoxidpulvers mit einem mittleren Teilchendurchmesser von 0,6 µm in einem Bindemittelgemisch aus 69,8 Teilen einer 12,8%igen Lösung eines thermoplastischen Polyesterurethans aus Adipinsäure, Butandiol-1,4 und 4,4'-Diisocyanatdiphenylmethan, 29,1 Teilen einer 30%igen Lösung eines unverzweigten Polyesters, 74,8 Teilen einer 10%igen Lösung eines Polyvinylformals, bestehend aus 82 % Vinylformal-, 12 % Vinylacetat- und 6 % Vinylalkoholeinheiten, mit einem K-Wert von 50 (1 % in DMF) und 62,8 Teilen einer Nitrocelluloselösung in einem Gemisch aus gleichen Teilen Tetrahydrofuran und Dioxan, weiteren 43,7 Teilen Tetrahydrofuran und 281,4 Teilen Dioxan und Zusatz von einem Teil eines Dispergierhilfsmittels auf Basis eines N-Talgfett-1,3-Diaminodioleats, 8,0 Teilen Butoxyethylstearat, 2,0 Teilen Myristinsäure und 0,1 Teilen Silikonöl in einer 1000 Volumenteilen fassenden, mit 700 bis 750 Volumenteilen Kugeln, bestehend aus 69 % ZrO₂ und 31 % SiO₂ mit einem Durchmesser von 0,6 bis 1,5 mm gefüllten Rührwerksmühle dispergiert. Anschließend wurden 700 Teile dieser Magnetdispersion in einer 1000 Volumenteile fassenden Kugelmühle mit 300 Volumenteilen Stahlkugeln mit einem Durchmesser von 4 bis 6 mm 3 Stunden nachbehandelt. Nach Beendigung des Finishprozesses wurde die Magnetdispersion filtriert, 4,1 Teile einer 50%igen Lösung eines Triisocyanats, gefertigt aus 3 Molen Toluylendiisocyanat und 1 Mol 1,1,1-Trimethylolpropan in Tetrahydrofuran hinzugefügt und 20 Minuten intensiv gerührt. Nach dem Filtrieren der Dispersion wurde diese schichtförmig auf eine 75 µm dicke Polyethylenterephthalatfolie unter gleichzeitiger Ausrichtung der Magnetpartikel mittels eines Permanentmagneten beidseitig aufgetragen. Die nach dem Trocknen 1,2 µm dicke Magnetschicht wurde durch Hindurchführen zwischen beheizten Walzen und unter Druck geglättet und aus der beiseitig beschichtete Folienbahn in runde Scheiben mit einem Durchmesser von 3,5" gestanzt. Die Messungen erfolgten wie bei Beispiel 1 angegeben. Die Ergebnisse sind in Tabelle 2 aufgeführt.

### Vergleichsversuch 4

Es wurde wie im Beispiel 2 beschrieben verfahren, jedoch wurde auf den dem Dispergieren nachgeschalteten Finishprozess verzichtet. Die Ergebnisse sind in Tabelle 2 angegeben.

### Vergleichsversuch 5

Es wurde wie im Beispiel 2 beschrieben verfahren, jedoch wurden 1,5 Teile statt 1,0 Teile des Dispergierhilfsmittels auf Basis eines N-Talgfett-1,3-Diaminodioleats zugesetzt und auf den nachgeschalteten Finishprozess verzichtet. Die Ergebnisse sind in Tabelle 2 angegeben.

**Tabelle 2**

| | Beispiel | Vergleichsversuche | |
|---|---|---|---|
| | 2 | 4 | 5 |
| Glanz B unsatiniert (Skt.) | 42 | 25 | 30 |
| Glanz B satiniert (Skt.) | 86 | 68 | 72 |
| R_{Z} satiniert (µm) | 0,20 | 0,38 | 0,34 |
| Overwrite nach ECMA-Norm (%) (Sollwert größer 90 %) | 99 | 81 | 84 |

## Patentansprüche

1. Verfahren zur Herstellung magnetischer Aufzeichnungsträger durch Dispergieren von feinteiligem, magnetischem Material in einem Gemisch aus Lösungsmitteln, organischen Polymerbindemitteln, Dispergierhilfsmitteln und weiteren Zusatzstoffen, schichtförmiges Auftragen der Dispersion auf ein Trägermaterial und anschließendes Verfestigen der Schicht, wobei die Dispersion in einer Rührwerksmühle, welche mit Mahlkörpern mit einem Durchmesser von 0,2 bis 3,0 mm und einer Dichte von 3,6 bis 3,9 g/cm³ gefüllt ist, hergestellt wird, und die Viskosität der resultierenden Dispersion, gemessen bei einer Temperatur von 25°C, mindestens 50 mPas beträgt, mit der Maßgabe, daß das eingesetzte feinteilige, magnetische Material eine Oberfläche nach BET von mindestens 14 m²/g aufweist, dadurch gekennzeichnet, daß die Dispersion anschließend in einer Kugelmühle, enthaltend Mahlkörper mit einem Durchmesser von mehr als 2,0 mm und einer Dichte von größer als 4,2 g/cm³, nachbehandelt wird.

2. Verfahren gemäß Anspruch 1, dadurch gekennzeichnet, daß die Dispersion in einer Rührwerksmühle, welche mit kugelförmigen, Mahlkörpern einer Zusammensetzung aus 60 bis 80 Gew.% ZrO₂ und 20 bis 40 Gew.% SiO₂ mit einem mittleren Durchmesser von 0,6 bis 2,0 mm gefüllt ist, hergestellt wird.

3. Verfahren gemäß Anspruch 1, dadurch gekennzeichnet, daß die Dispersion nach der Dispergierung in der Rührwerksmühle in einer Kugelmühle, welche mit kugelförmigen Mahlkörpern, bestehend aus Stahl oder einer Metall-Legierung, mit einem mittleren Durchmesser von 2,0 bis 10,0 mm gefüllt ist, nachbehandelt wird.

## Claims

1. A process for the production of a magnetic recording medium by dispersing finely divided, magnetic material in a mixture of solvents, organic polymer binders, dispersants and further additives, applying the dispersion as a layer to a substrate and subsequently consolidating the layer, the dispersion being prepared in a stirred ball mill which contains grinding media having a diameter of from 0.2 to 3.0 mm and a density of from 3.6 to 3.9 g/cm³ and the viscosity of the resulting dispersion, measured at 25°C, being not less than 50 mPa.s, with the proviso that the finely divided, magnetic material used has a BET surface area of not less than 14 m²/g, wherein the dispersion is then aftertreated in a ball mill containing grinding media having a diameter of more than 2.0 mm and a density greater than 4.2 g/cm³.

2. A process as claimed in claim 1, wherein the dispersion is prepared in a stirred ball mill which contains spherical grinding media composed of from 60 to 80% by weight of ZrO₂ and from 20 to 40% by weight of SiO₂ and having a mean diameter of from 0.6 to 2.0 mm.

3. A process as claimed in claim 1, wherein, after dispersing has been carried out in the stirred ball mill, the dispersion is aftertreated in a ball mill which contains spherical grinding media consisting of steel or a metal alloy and having a mean diameter of from 2.0 to 10.0 mm.

## Revendications

1. Procédé de fabrication de supports d'enregistrement magnétiques, par dispersion d'un matériau magnétique, finement réparti, dans un mélange composé de solvants, de liants polymères organiques, d'aides à la dispersion et autres additifs, application en couche de la dispersion sur un matériau support, puis solidification de la couche, la dispersion étant préparée dans un broyeur agitateur, chargé avec des corps de broyage d'un diamètre de 0,2 à 3,0 mm et d'une masse volumique de 3,6 à 3,9 g/cm³, la viscosité de la dispersion résultante, mesurée à une température de 25° C, étant d'au moins 50 mPas, sous réserve que le matériau magnétique finement divisé utilisé présente un grammage, exprimé suivant BET, d'au moins 14 m²/g, caractérisé en ce que la dispersion est ensuite retraitée dans un broyeur à boulets, contenant des corps de broyage d'un diamètre supérieur à 2,0 mm et d'une masse volumique supérieure à 4,2 g/cm³.

2. Procédé selon la revendication 1, caractérisé en ce que la dispersion est préparée dans un broyeur agitateur rempli de corps de broyage sphériques, d'une composition de 60 à 80 % en poids de ZrO₂ et de 20 à 40 % en poids de SiO₂, avec un diamètre moyen compris entre 0,6 et 2,0 mm.

3. Procédé selon la revendication 1, caractérisé en ce qu'après la dispersion dans le broyeur agitateur, la dispersion est retraitée dans un broyeur à boulets, rempli de corps de broyage sphériques, en acier ou en un alliage métallique, avec un diamètre moyen compris entre 2,0 et 10,0 mm.
